Europäisches Patentamt

European Patent Office

Office européen des brevets

(19)

(11) Publication number: **0 220 888**
**A2**

(12)    # EUROPEAN PATENT APPLICATION

(21) Application number: **86308035.4**

(22) Date of filing: **16.10.86**

(51) Int. Cl.⁴: **G 01 N 27/46**

---

(30) Priority: **16.10.85 GB 8525469**

(43) Date of publication of application: **06.05.87**
**Bulletin 87/19**

(84) Designated Contracting States: **AT BE CH DE ES FR GB GR IT LI LU NL**

(71) Applicant: **Flowline Systems Limited, 183-191 Ballards Lane, Finchley London N3 1LL (GB)**

(72) Inventor: **Jeffreys, David Anthony, 5 Merton Road, Maidstone Kent. ME15 8CJ (GB)**

(74) Representative: **Clifford, Frederick Alan et al, MARKS & CLERK 57/60 Lincoln's Inn Fields, London WC2A 3LS (GB)**

(54)    **Sensing and measuring device.**

(57)    The present invention is concerned with improvements in sensing and measuring devices, more particularly for use in combination with, an ion-selective electrode.

The apparatus comprises a signal processing unit (1), connector means (2) for connection of the signal processing unit to an ion sensitive electrode (3) capable of response to the presence of an analyte and to a reference electrode (4). The apparatus further comprises output means (5), capable of indicating the presence and/or concentration of the analyte. The signal processing unit (1) comprises a replaceable or reprogrammable memory device (6) for the storage of a look-up table. The memory device (6) is an EPROM for interchangeable location in a socket (7) connected electrically to the signal processing unit (1). The EPROM contains a look-up table which will be specific for the electrodes being used. In the present instance, with an ammonium ISE and a double-junction reference electrode, the values range from $-15$ mV at $0.1$ ppm (as Nitrogen) to $+45$ mV at 1000 ppm.

1

M&C FOLIO: 51111                    WANGDOC: 0433s

TITLE:

## SENSING AND MEASURING DEVICE

### FIELD OF INVENTION:

The present invention is concerned with improvements in sensing devices, more particularly for devices comprising, or for use in combination with, a chemically-selective electrode.

### SUMMARY OF PRIOR ART:

One class of chemically sensitive electrodes are the ion selective electrodes.

An ion-selective electrode exhibits an electrical response, either in the the form of a change in current or voltage, or as a combination of both, in response to a change in the concentration of a particular ionic species at the electrode surface. A well known example of such an electrode is the pH-electrode, by which the hydrogen-ion concentration in a solution may be measured. A number of other ion-selective electrodes (ISE's) are known. For example, the devices of Bergvald [IEEE transactions BME,

2

17 70-71 (1970)] which employed ion-selective field-effect transistors (ISFET's), have been developed to provide ex vivo blood-electrolyte cation analysis via an indwelling cannula. Other types of ISE have found uses in non-physiological situations, such as effluent analysis, where methanol, carbon-dioxide and/or ammonia concentrations have been measured. ISE's, of the ISFET and other types, are now availiable for at least the following monovalent cations; $K^+$, $Na^+$, $H^+$ (pH), $NH_4^+$, as well as for other species such as $Ca^{2+}$. Combinations of these ISE's have been embodied in single apparatus. The present invention will be described with particular reference to an ammonium-ion selective electrode.

Other types of chemically sensitive electrode include conductometric, amperometric and voltametric biosensors.

While much attention has been given to the actual construction and use of such electrodes, less attention has been given to the associated response sensing and measuring apparatus, that is to the means for converting the output signal of the electrode to a value indicative of the analyte concentration in suitable units.

One major difficulty with the abovementioned conversion is that the output of ISE's may be non-linear over some or all of the effective sensing range, i.e. that range over which a measurable response of the ISE to a change in analyte concentration can be detected. For example, the ISE output signal often has a logarithmic relation to the analyte concentration.

Prior solutions to this difficulty have included the use of calibration and graph-plotting apparatus to produce calibration graphs, or the use of dedicated electronic circuitry. For example, european patent application 0122952 and PCT application 85/04017 mention dedicated logical circuits and the use of the parameters and coefficients of a working curve which are programmed in advance of measurement. European Patent Application 0074498 describes a calibration device suitable for use with ion selective sensors.

Even with these modifications, the use of ion-selective electrodes has been largely confined to the laboratory, as the sensing and measuring apparatus has been large and not readily portable. Such portable units as have been made, such as the portable pH sensor or the portable "sniffer" for explosives and/or drugs have been confined to a single application and can not be adapted to use an electrode for which they were not originaly designed

4

<u>TECHNICAL PROBLEM</u>;

It is an object of the present invention to provide a portable sensing and measuring device comprising, or for use in combination with, a plurality of interchangable ion-selective electrodes.

<u>DESCRIPTION OF INVENTION</u>;

According to a first aspect of the present invention there is provided a sensing device for use with an ion-selective electrode comprising;

a) a signal processing unit,

b) connector means for connection of the signal processing unit to an ion sensitive electrode capable of response to the presence of an analyte and to a reference electrode, and,

c) output means, capable of indicating the presence and/or concentration of the analyte.

CHARACTERISED IN THAT the signal processing unit comprises a replaceable or reprogrammable memory device for the storage of a look-up table.

By employing a replaceable or reprogrammable memory device for the storage of a look-up table, is is possible to use the sensing and/or measuring device of the present invention with a number of different ion-selective electrodes, provided that the look-up table held in the memory relates the output of the ISE in use to the concentration of the analyte under assay.

A particular advantage of the use of a look-up table is that the response of the electrode can be highly non-linear whilst a linear output of the signal processing unit is maintained.

Typically, the memory device comprises a Programmable Read-Only Memory (PROM) device, more preferably an Erasable Programmable Read-Only Memory (EPROM) device.

While an EPROM may be re-programmed _in situ_ it is preferable that a number of EPROM's are provided for interchangable location in a socket connected electrically to the signal processing unit.

As an alternative to the PROM device, it is envisaged that an alternative type of replaceable or reprogrammable memory device may be used for the storage of the look-up table, such as a CMOS-type device.

Conveniently, the signal processing unit further comprises an amplifier, preferably of the low-noise, high impedance type, in line before a converter which refers to the look-up table held in memory. An impedance of 30Mohms has been found suitable for the amplifier.

6

Preferably, the signal processing unit further comprises means for applying a selected calibration bias to the signal, preferably in-line between the amplifier and the converter.

In a particular embodiment of the invention, the calibration bias is such that a OmV signal is equivalent to an analyte concentration of 1ppm.

More preferably, the signal processing unit further comprises means for applying a selected calibration slope to the signal, preferably in the converter.

In use, the selected calibration slope is pre-set by the assay of a sample of known concentration. This calibration is neccessary to improve accuracy in those embodiments which employ, or are used with an ISE which gives a non-Nernstian slope due to, for example, electrode aging. A preffered range for the slope calibration is from 80-110% of the theroretical (Nernstian) value.

The sensing and/or measuring device can further comprise an output to an electronic data-logging system. In order to accomodate a wide range of ISE's, a signal divider can be incorporated in-line prior to the amplifier, to provide the input for the amplifier within the linear portion of the amplifiers response range.

The output means can be capable of indicating the mere presence of the analyte, or can provide an indication of the concentration of the analyte. In a preffered embodiment of the invention both a decimal place (ppm) and an analog bar graph display are employed.

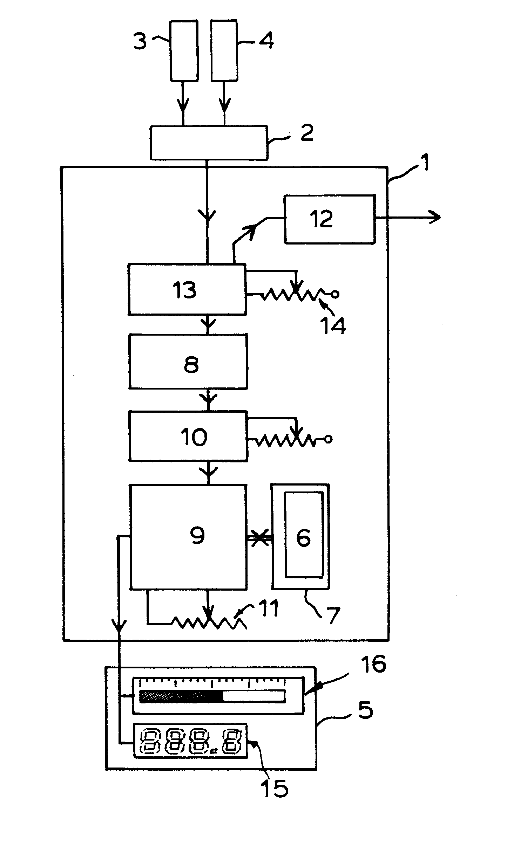

In order that the invention may be further understood, reference will be made, by way of example, to the accompanying drawing in which a sensing and/or measuring device according to the present invention is illustrated by means of a flow-chart.

In the figure, a exemplary device according to the present invention, for the assay and/or measurement to ammonium$^+$ concentration is shown. This meter has particular utillity in pollution-control studies where the degree of "nitrification" must be measured in order to determine the required degree of areation and retention time for sewage, or where a source of organic pollution in a watercourse is being traced.

The apparatus comprises a signal processing unit (1), connector means (2) for connection of the signal processing unit to an ion sensitive electrode (3) capable of response to the presence of an analyte and to a reference electrode (4). The apparatus further comprises output means (5), capable of indicating the presence and/or concentration of the analyte. The signal processing unit (1) comprises a replaceable or reprogrammable memory device (6) for the storage of a look-up table.

In the example given, the ISE is a Phillips IS561 electrode. This is a commercially available selective polymer membrane electrode assembly which is sensitive to the concentration of ammonium $(NH_4^+)$ ions. This particular electrode is not a gas sensing membrane system and as such does not require any adjustment of pH to produce free measurable ions. The electrode assembly contains both the ammonium ion sensitive electrode (3) and the reference electrode (4). The reference electrode comprise a standard colonel electrode (SCE) within a cell containing a filling solution of 3 molar potassium chloride (saturated).

The memory device (6) is a PROM, preferably an EPROM, for interchangable location in a socket (7) connected electrically to the signal processing unit (1). The EPROM contains a look-up table which will be specific for the electrodes being used. In the present instance, with an ammonium ISE and a double-junction reference electrode, the output ranges from -15mV at 0.1ppm (as ammoniacal nitrogen) to +150mV at 1000ppm. In the present example values for the look-up table are given for a range from 0mV at 1.0ppm to 97mV at 50ppm.

9

The following set of values are held in the look-up table;

| PPM | mV | | PPM | mV |
|-----|-----|---|------|------|
| 1.0 | 0.0 | | 25.0 | 79.9 |
| 1.5 | 10.1 | | 25.5 | 80.3 |
| 2.0 | 17.2 | | 26.0 | 80.8 |
| 2.5 | 22.7 | | 26.5 | 81.3 |
| 3.0 | 27.3 | | 27.0 | 81.8 |
| 3.5 | 31.1 | | 27.5 | 82.2 |
| 4.0 | 34.4 | | 28.0 | 82.7 |
| 4.5 | 37.3 | | 28.5 | 83.1 |
| 5.0 | 39.9 | | 29.0 | 83.5 |
| 5.5 | 42.3 | | 29.5 | 84.0 |
| 6.0 | 44.4 | | 30.0 | 84.4 |
| 6.5 | 46.4 | | 30.5 | 84.8 |
| 7.0 | 48.3 | | 31.0 | 85.2 |
| 7.5 | 50.0 | | 31.5 | 85.6 |
| 8.0 | 51.6 | | 32.0 | 86.0 |
| 8.5 | 53.1 | | 32.5 | 86.4 |
| 9.0 | 54.5 | | 33.0 | 86.7 |
| 9.5 | 55.8 | | 33.5 | 87.1 |
| 10.0 | 57.1 | | 34.0 | 87.5 |
| 10.5 | 58.3 | | 34.5 | 87.8 |
| 11.0 | 59.5 | | 35.0 | 88.2 |
| 11.5 | 60.6 | | 35.5 | 88.5 |
| 12.0 | 61.6 | | 36.0 | 88.9 |
| 12.5 | 62.7 | | 36.5 | 89.2 |
| 13.0 | 63.6 | | 37.0 | 89.6 |
| 13.5 | 64.6 | | 37.5 | 89.9 |
| 14.0 | 65.5 | | 38.0 | 90.2 |
| 14.5 | 66.3 | | 38.5 | 90.6 |
| 15.0 | 67.2 | | 39.0 | 90.9 |
| 15.5 | 68.0 | | 39.5 | 91.2 |
| 16.0 | 68.8 | | 40.0 | 91.5 |
| 16.5 | 69.5 | | 40.5 | 91.8 |
| 17.0 | 70.3 | | 41.0 | 92.1 |
| 17.5 | 71.0 | | 41.5 | 92.4 |
| 18.0 | 71.7 | | 42.0 | 92.7 |
| 18.5 | 72.4 | | 42.5 | 93.0 |
| 19.0 | 73.0 | | 43.0 | 93.3 |
| 19.5 | 73.7 | | 43.5 | 93.6 |
| 20.0 | 74.3 | | 44.0 | 93.9 |
| 20.5 | 74.9 | | 44.5 | 94.2 |
| 21.0 | 75.5 | | 45.0 | 94.4 |
| 21.5 | 76.1 | | 45.5 | 94.7 |
| 22.0 | 76.7 | | 46.0 | 95.0 |
| 22.5 | 77.2 | | 46.5 | 95.2 |
| 23.0 | 77.8 | | 47.0 | 95.5 |
| 23.5 | 78.3 | | 47.5 | 95.8 |
| 24.0 | 78.8 | | 48.0 | 96.0 |
| 24.5 | 79.3 | | 48.5 | 96.3 |
| | | | 9.0 | 96.5 |
| | | | 49.5 | 96.8 |
| | | | 50.0 | 97.0 |

The signal processing unit (1) comprises a low-noise amplifier (8) of 30Mohms impedance, in line before a converter (9) which refers to the look-up table. The signal processing unit (1) further comprises a calibration bias potentiometer (10) in-line between the amplifier (8) and the converter (9). The calibration bias is set such that a 0mV signal is equivalent to an analyte concentration of 1ppm.

A second potentiometer (11) applies a calibration slope to the signal, in the converter (9). In use, the selected calibration slope is pre-set by the assay of a ammonium solution of known concentration. A 10ppm solution of ammonium should give a theroretical +15mV at the amplification stage (Nernstian), however this may vary somewhat due to electrode aging, consequently the potentiometer (11) enables the slope to be varied from 80-110% of the Nernstian value.

An output to an electronic data-logging system is provided at (12) from signal divider (13). The signal divider (13) divides the signal from the electrode, to suit the converter. In the example given there is a 1:4 split, hence, with an input signal of -56mV per decade (typical of the $NH_4^+$ electrode), the split signal to the amplifier will be about 15mV per decade concentration.

These signals will vary with electrode age and type, and consequently the degree of splitting may be selectively varied at range potentiometer (14).

The output means (5) provides both an indication of the concentration in numeric format (15) (as ppm) and as an analog bar graph (16) with, in the case of ammonium, a range of 0.1 to 1000 ppm.

Although the example given is intended for the measurement of ammonium ion concentrations, it should be understood that by replacing the EPROM (16) and using a suitable electrode, measurements can be made of the following monovalent cations; $K^+$, $Na^+$, $H^+$ (pH), $NH_4^+$, as well as other species such as $Ca^{2+}$. Moreover it is envisaged that the use of other types of electrode, that is chemically sensitive electrodes which are of a non-ion specific type lies within the broad inventive concept of the present invention.

For field-use, the signal processing unit (1) and the output means (5) are located in a fluid-tight box, together with an internal power supply, or connections for an external power supply. The connector (2) for the electrodes, and the optional connector (12) for the external data-logging unit may be mounted on the surface of the box. The data logging unit is supplied with an uncalibrated mv electrode signal, which is stored for later use.

For calibration, a 1000 ppm ammonia solution is prepared by weighing 3.8142g of Ammonium Chloride dried to constant weight at 105°C and making-up a stock solution to 1000ml of ammonia-free distilled water. This stock solution will keep well if refrigerated.

1ml of this stock solution contains 1000µg of ammoniacal nitrogen; this is taken as a 1000ppm solution. 20ml of this stock solution can be diluted to a total volume of 200ml to give a 100µg/ml (100ppm) solution, and subsequent serial dilutions give 10ppm and 1ppm solutions. Such dilutions should be made up as required, and not kept for longer than 24hrs.

With a #PROM bearing an ammonium -ion concentration look-up table in the device and an ammonium sensitive electrode connected to the device, the device is calibrated as follows;

150-200mls of 1ppm standard solution are placed in a beaker and stirred magnetically at a slow rate. The electrode assembly is immersed in this solution. The device is switched on and allowed to stabilise for two minutes. The first potentiometer (10) is adjusted to obtain a reading of 1.0 ppm. The electrode is removed from the solution rinsed in ammonia-free water and immersed in a second standard. The particular choice of this second standard will depend on the measurment being contemplated. Where the sample concentration is expected to lie closer to 10 ppm, that is the range 10-50ppm, the 10ppm standard should be used. For expected concentrations above 50ppm the 100ppm standard is employed. The device is again given time to stabillise and the second potentiometer (11) is adjusted until a reading corresponding to the concentration of the second standard is obtained.

At this stage in the calibration procedure the calculated slope of the notional response curve obtained from these two points can be recorded. Preferably, this is done by first pressing a SLOPE READ button and noting the value. With the device configured for an ammonium sensing application as described above the electrode assembly should be replaced when the slope is above 162 or a correct figure for the second standard cannot be obtained.

EPO CLAIMS:

1) A sensing and/or measuring device for use with an ion-selective electrode comprising:

    a) a signal processing unit,

    b) connector means for connection of the signal processing unit to an ion sensitive electrode capable of response to the presence of an analyte and to a reference electrode, and,

    c) output means, capable of indicating the presence and/or concentration of the analyte.

CHARACTERISED IN THAT the signal processing unit comprises a replaceable or reprogrammable memory device for the storage of a look-up table.

2) The device of claim 1, wherein the memory device comprises a Programmable Read-Only Memory, preferably an erasable Programmable Road-Only Memory.

3) The device of claim 2, wherein the EPROM is provided for interchangable location in a socket connected electrically to the signal processing unit.

4) The device of claim 1, wherein the signal processing unit further comprises an amplifier in line before a converter which refers to the look-up table.

5) The device of claim 4, wherein the signal processing unit further comprises means for applying a selected calibration bias to the signal, the said bias being applied in-line between the amplifier and the converter.

6) The device of claim 4, wherein the signal processing unit further comprises means for applying a selected calibration slope to the signal, the said bias being applied in the converter.

7) The device of any of the above claims further comprising an output to an electronic data-logging system.

8) The device of claim 4, comprising a signal divider can be incorporated in-line prior to the amplifier, to provide the input for the amplifier within the linear portion of the amplifiers response range.

9) The device of any of the above claims wherein the output means comprise either a decimal place (ppm) or an analog bar graph display or both.

1-1